# EUROPÄISCHE PATENTSCHRIFT

(11) **EP 3 642 634 B1**
(45) Veröffentlichungstag und Bekanntmachung des Hinweises auf die Patenterteilung: **26.07.2023**
(21) Anmeldenummer: 18734168.0
(22) Anmeldetag: 20.06.2018
(51) Int. Cl.: G01P 1/00, G01P 1/02, G01D 11/30

(54) **ANORDNUNG EINES DREHIMPULSGEBERS UND EINER KLEMMHÜLSE ZUR ERFASSUNG EINER DREHZAHL EINES ROTORS**
ARRANGEMENT OF VEHICLE SPEED SENSOR AND CLAMPING SLEEVE FOR SENSING THE SPEED OF ROTATION OF A ROTOR
ENSEMBLE DE CAPTEUR D'IMPULSIONS ROTATIVES ET DE DOUILLE DE SERRAGE POUR DÉTECTER UNE VITESSE DE ROTATION D'UN ROTOR

(30) Priorität: 20.06.2017 DE 102017113604
(43) Veröffentlichungstag der Anmeldung: 29.04.2020
(73) Patentinhaber: KNORR-BREMSE Systeme für Nutzfahrzeuge GmbH, 80809 München (DE)
(72) Erfinder: BLESSING, Michael, 80687 München (DE); KLUFTINGER, Andre, 63924 Kleinheubach (DE)
(74) Vertreter: Kleine, Hubertus
(86) Internationale Anmeldenummer: PCT/EP2018/066492
(87) Internationale Veröffentlichungsnummer: WO 2018/234418

(56) Entgegenhaltungen:
- EP-A1- 2 133 699
- EP-A2- 1 284 424
- DE-A1- 2 715 426
- DE-A1-102007 056 340
- DE-A1-102009 054 521
- DE-A1-102010 049 552
- DE-A1-102012 024 762
- DE-A1-102013 010 925
- US-A1- 2006 277 985

## Beschreibung

Die Erfindung betrifft eine Anordnung eines stabförmigen Drehimpulsgebers und einer Klemmhülse in einer Bohrung einer Halterung zur Erfassung einer Drehzahl eines Rotors, wobei der Drehimpulsgeber eine Sensorbasis mit Anschlüssen des Drehimpulsgebers und einen Sensorkopf mit einer Messspitze aufweist und wobei die Klemmhülse verdrehsicher in der Bohrung positioniert ist und der Drehimpulsgeber mit einem Sensorkopf axial verschiebbar in der Klemmhülse kraftschlüssig gehalten ist.

Drehimpulsgeber werden beispielsweise zur Erfassung der Drehzahl von Fahrzeugrädern, insbesondere im Nutzfahrzeugbereich, verwendet. Die erfasste Drehzahl wird z.B. für eine korrekte Ansteuerung von ABS (Antiblockiersystem)-Bremsanlagen verwendet, wobei der Rotor mit einem Fahrzeugrad verbunden ist und beispielsweise als Polzahnrad mit abwechselnd ausgerichteten magnetischen Polen ausgebildet ist.

Aus der Druckschrift DE 10 2009 054 521 A1 ist ein Drehimpulsgeber bekannt, dessen axiale Position mittels eines Klemmrings mit einer Druckschraube eingestellt und fixiert wird. Auf ähnliche Weise wird gemäß der Druckschrift DE 10 2010 049 552 A1 durch eine Schraube oder ein Bolzen ein Drehimpulsgeber in einer vorgegebenen oder auch einstellbaren Axialposition in einer Aufnahme fixiert.

Die Druckschriften DE 10 2007 056 340 A1, EP 1 284 424 A2, DE 10 2012 024 762 und DE 10 2013 010 925 A1 beschreiben jeweils Anordnungen, bei denen eine Klemmhülse in eine Bohrung einer Halterung eingesetzt wird, die einen Sensorkopf eines Drehimpulsgebers ihrerseits klemmend hält. Die axial verschiebbare klemmende Halterung des Drehimpulsgebers ermöglicht es, einen Luftspalt zwischen dem Rotor und dem Drehimpulsgeber einzustellen. Bedingt durch Toleranzen in der Montage, thermische Ausdehnungen oder einen Lagerverschleiß, der sich auf die Position des Rotors auswirkt, kann der Drehimpulsgeber in Berührung mit dem Rotor kommen und durch die axiale verschiebbare kraftschlüssige Halterung zurückweichen, so dass es zu keiner Beschädigung des Drehimpulsgebers oder des Rotors kommt.

Als stabförmige Drehimpulsgeber sind passiv, beispielsweise induktiv arbeitende Sensoren bekannt. Diese können um ihre Längsachse verdreht werden, ohne dass das Messergebnis beeinflusst wird.

Weiter sind aktiv arbeitende Drehimpulsgeber bekannt, die beispielsweise Hall-Sensoren aufweisen. Das Messergebnis derartiger aktiver Drehimpulsgeber ist von der Drehstellung des Drehimpulsgebers innerhalb der Halterung abhängig. Bei dem Einsatz von aktiven Drehimpulsgebern ist eine korrekte Orientierung des Drehimpulsgebers sicherzustellen, indem eine Verdrehung des Drehimpulsgebers um seine Längsachse verhindert wird.

Eine Möglichkeit der Verdrehsicherung zwischen Sensor und Halterung zeigen die Druckschriften EP 2 133 699 A1 und US 2006/0277985 A1, bei denen der Sensorkopf vollständig asymmetrisch ausgebildet ist und nur in einer einzigen Drehposition in seine Halterung eingesetzt werden kann. Eine axiale Verschiebbarkeit ist dabei nicht vorgesehen.

Gemäß der Druckschrift DE 10 2008 054 000 A1 ist auf den Drehimpulsgeber ein Anschlussadapter zur elektrischen Kontaktierung aufgesetzt. Der Drehimpulsgeber ist als aktiver Sensor ausgebildet und entsprechend in einer vorgegebenen Orientierung gehalten. Zu diesem Zweck ist eine Verdrehsicherung entweder zwischen dem Anschlussadapter und der Halterung ausgebildet, oder zwischen dem Anschlussadapter und der Klemmhülse, wobei die Klemmhülse ihrerseits dann gegenüber der Halterung verdrehsicher in der Bohrung der Halterung positioniert ist. Diese kann beispielsweise durch nach außen umgebogene Laschen der Klemmhülse erreicht werden, die in entsprechende Einbuchtungen am oberen Rand der Bohrung eingesetzt sind. Eine Klemmhülse mit nach außen abgebogenen Laschen zur Verdrehsicherung ist beispielsweise auch aus der Druckschrift DE 27 15 426 A1 bekannt.

Die Verdrehsicherung ist beispielsweise dadurch realisiert, dass am Anschlussadapter radial beabstandet vom Sensorkopf und parallel zum Sensorkopf ausgerichtete Stifte angeordnet sind, die in zusätzliche Bohrungen der Halterung eingreifen. Die axiale Verschiebbarkeit des Sensorkopfes ist durch die Kombination aus Stift und Bohrung durch diese Art der Verdrehsicherung nicht beeinträchtigt.

Bei Ausbildung der Verdrehsicherung zwischen Anschlussadapter und Klemmhülse ist an der Klemmhülse ein in Längsrichtung über die Bohrung hinausragender Stift angeordnet, der in eine entsprechende Bohrung am Adapter eindringt. Der Anschlussadapter und damit der Sensorkopf sind so in ihrer Drehposition festgelegt, lassen sich jedoch nach wie vor axial verschieben. In beiden genannten Fällen ist es erforderlich, dass der Anschlussadapter radial (seitlich) über den Durchmesser des Sensorkopfs hinausragt, um den Führungsstift oder eine Bohrung für den Führungsstift radial beabstandet vom Sensorkopf bereitzustellen.

Es ist eine Aufgabe der vorliegenden Erfindung, eine Anordnung eines stabförmigen Drehimpulsgebers und einer Klemmhülse zu schaffen, bei denen eine verdrehsichere Lagerung des Drehimpulsgebers innerhalb der Klemmhülse auch ohne einen radial über die Klemmhülse hinausragenden Anschlussadapter erreicht wird.

Diese Aufgabe wird durch eine Anordnung mit den Merkmalen des unabhängigen Anspruchs gelöst.

Eine erfindungsgemäße Anordnung der eingangs genannten Art zeichnet sich dadurch aus, dass der Sensorkopf in einem ersten Abschnitt einen nicht-zylindersymmetrischen Querschnitt mit einer Orientierungsfläche aufweist, und dass die Klemmhülse mindestens ein nach innen weisendes Orientierungselement aufweist, durch das der Sensorkopf aufgrund eines Zusammenspiels von dem Orientierungselement und der Orientierungsfläche verdrehsicher in der Klemmhülse angeordnet ist, und dass der Sensorkopf in einem weiteren Abschnitt, der sich an die Messspitze anschließt, zylindersymmetrisch ausgebildet ist.

Der nicht-zylindersymmetrische Querschnitt des ersten Abschnitts des Sensorkopfes selbst und das damit zusammenwirkende Orientierungselement der Klemmhülse ermöglichen eine verdrehsichere und gleichwohl axial verschiebbare Halterung des Sensorkopfes innerhalb der Klemmhülse und damit innerhalb der Halterung. Dadurch, dass die miteinander wirkenden Elemente im Bereich der Bohrung angeordnet sind, ist die Verdrehsicherung unabhängig von den Abmessungen eines Anschlussadapters, der entsprechend platzsparend aufgebaut sein kann. Das Orientierungselement konturiert die Klemmhülse so, dass sie den nicht-zylindersymmetrischen Querschnitt des ersten Abschnitts des Sensorkopfes verdrehsicher aufnimmt. Gleichwohl können Vorteile eines zylindersymmetrischen Abschnitts des Sensorkopfes im Bereich der Messspitze genutzt werden.

Bei einer vorteilhaften Ausgestaltung der Anordnung weist die Klemmhülse mindestens ein nach innen weisendes Klemm- und Positionierungselement auf, um den Sensorkopf axial verschiebbar zu halten. Bevorzugt ist das mindestens eine Klemm- und Positionierungselement starr oder flexibel ausgebildet. Weiter bevorzugt umfasst das mindestens eine Klemm- und Positionierungselement mindestens einen starren Dom und ein diesem gegenüberliegendes Federelement. Die starren Dome dienen als Anlageflächen für Seitenflächen des Sensorkopfs, der somit in seitlicher (radialer) Richtung exakt positioniert ist. Auf jeweils gegenüberliegenden Seitenflächen liegen dann die Federelemente an, die entsprechend den Sensorkopf gegen die Dome drücken. Die Federelemente fungieren somit als Klemmelemente, die aufgrund eines Kraftschlusses die Möglichkeit zur axialen Verschiebbarkeit zu Einstellzwecken geben.

In einer bevorzugten Weiterbildung sind die beiden Dome im Hinblick auf ihre Radialposition in der Klemmhülse zueinander verdreht angeordnet, bevorzugt um 90°. Durch die Anordnung von zwei radial zueinander versetzten Domen ist die Radialposition des Sensorkopfes mit einer minimalen Anzahl an Positionierungselementen eindeutig definiert.

Bei einer weiteren vorteilhaften Ausgestaltung der Anordnung ist bzw. sind das Orientierungselement und/oder das mindestens eine Klemm- und Positionierungselement aus einem Grundkörper der Klemmhülse herausgestanzt bzw. geprägt. So kann die Klemmhülse einstückig mit allen genannten Funktionselementen in einem einfachen und kostengünstigen Herstellungsverfahren, insbesondere einem Stanz-Biege-Verfahren gefertigt werden. Auf diese Weise hergestellt ist die Klemmhülse zudem mechanisch robust und thermisch hoch belastbar.

Bei einer weiteren vorteilhaften Ausgestaltung der Anordnung weist die Klemmhülse mindestens ein Element auf, durch das sie verdrehsicher in der Bohrung positioniert ist. Dieses Element kann z.B. eine nach außen ausgestellte Lasche sein. Es kann zudem vorgesehen sein, durch die Lasche die Klemmhülse axial in der Bohrung zu positionieren. Auch die Lasche kann vorteilhaft einstückig in einem Stanz-Biege-Verfahren angeformt sein.

Bei einer weiteren vorteilhaften Ausgestaltung der Anordnung definiert die Formgebung des Sensorkopfs genau eine mögliche Drehposition des Sensorkopfs in der Klemmhülse. Ein im Querschnitt runder Sensorkopf mit einer abgeflachten Seite bietet beispielsweise diese Eigenschaft und stellt eine korrekte Drehstellung sicher, die insbesondere bei aktiven Drehimpulsgebern, z.B. solchen mit Hall-Sensor, wichtig sein kann. Alternativ kann die Formgebung des Sensorkopfs auch mehr als eine mögliche Drehposition des Sensorkopfs in der Klemmhülse definieren, beispielsweise zwei um 180° verdrehte Positionen, falls der Drehimpulsgeber einen um 180° gedrehten Einsatz zulässt. Die Möglichkeit beider Einsatzpositionen kann den Einbau vereinfachen.

Bei einer weiteren vorteilhaften Ausgestaltung der Anordnung ist der Sensorkopf zumindest abschnittsweise von einer Ummantelung umgeben. Die bevorzugt metallische Ummantelung schütz den Drehimpulsgeber thermisch und ermöglicht einen Einsatz in Umgebungen mit höheren Temperaturen. Die Ummantelung kann beispielsweise in einem Tiefziehverfahren aus einem dünnen Blech gefertigt sein.

Die Erfindung wird nachfolgend anhand von Ausführungsbeispielen mithilfe von Figuren näher erläutert. Die Figuren zeigen:
- Figur 1: eine schematische Querschnittszeichnung durch eine Halterung mit Klemmhülse und eingesetztem Sensor zur Erfassung einer Drehung eines Rotors;
- Figur 2a: eine schematische isometrische Darstellungen einer Klemmhülse, eingesetzt in eine Halterung;
- Figur 2b: die Anordnung gemäß Figur 2a mit eingesetztem Sensor;
- Figur 2c: eine alternative Ausgestaltung einer Klemmhülse;
- Figuren 3a-c: verschiedene Ansichten einer nicht erfindungsgemäßen Anordnung eines Sensors und einer Klemmhülse;
- Figuren 4a-d: verschiedene Ansichten einer Anordnung eines Sensors und einer Klemmhülse in einem ersten Ausführungsbeispiel;
- Figuren 5a, b: verschiedene Ansichten einer weiteren Modifikation der Anordnung des ersten Ausführungsbeispiels;
- Figuren 6a-d: verschiedene Ansichten einer nicht erfindungsgemäßen Anordnung der Klemmhülse mit einem passiven Sensor;
- Figuren 7a-c: verschiedene Ansichten einer weiteren nicht erfindungsgemäßen Anordnung eines Sensors und einer Klemmhülse;
- Figuren 8a-c: verschiedene Ansichten einer Anordnung eines Sensors und einer Klemmhülse in einem zweiten Ausführungsbeispiel;
- Figuren 9a, b: verschiedene Ansichten einer weiteren nicht erfindungsgemäßen Anordnung eines Sensors und einer Klemmhülse;
- Figuren 10a,: b verschiedene Ansichten einer Anordnung eines Sensors und einer Klemmhülse in einem dritten Ausführungsbeispiel;
- Figuren 11a,: b verschiedene Ansichten einer weiteren nicht erfindungsgemäßen Anordnung eines Sensors und einer Klemmhülse;
- Figuren 12a,: b verschiedene Ansichten einer Anordnung eines Sensors und einer Klemmhülse in einem vierten Ausführungsbeispiel;
- Figuren 13a,: b verschiedene Ansichten einer weiteren nicht erfindungsgemäßen Anordnung eines Sensors und einer Klemmhülse;
- Figuren 14a,: b verschiedene Ansichten einer Anordnung eines Sensors und einer Klemmhülse in einem fünften Ausführungsbeispiel;
- Figur 15: eine Ansicht einer weiteren nicht erfindungsgemäßen Anordnung eines Sensors und einer Klemmhülse; und
- Figur 16: eine Ansicht einer weiteren nicht erfindungsgemäßen Anordnung eines Sensors und einer Klemmhülse.

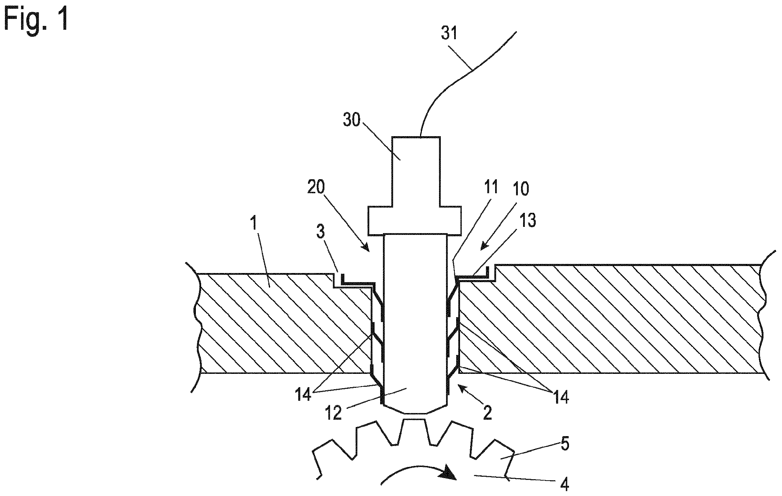

Figur 1 zeigt zunächst einen Grundaufbau einer Anordnung eines Sensors und einer Klemmhülse in einer schematischen Querschnittszeichnung.

Dargestellt ist eine Halterung 1, in die eine durchgehende Bohrung 2 eingebracht ist. In die Bohrung 2 ist eine Klemmhülse 10 eingesetzt, die einen Sensorkopf 22 eines Drehimpulsgebers 20 in der Bohrung 2 fixiert. Anstelle des Begriffs "Drehimpulsgeber" wird nachfolgend auch die Bezeichnung "Sensor" verwendet.

Der Sensor 20 ragt mit dem Sensorkopf 22 so aus der Bohrung 2 hervor, dass ein vorderes Ende des Sensorkopfes 22, das nachfolgend auch als Messspitze 23 bezeichnet wird, gegenüber einem äußeren Rand eines Rotors 4 positioniert ist. Der Rotor 4 ist mit einer Mehrzahl von Polzähnen 5 versehen, die im Bereich des Sensorkopfes 21 bei Drehung des Rotors 4 ein alternierendes Magnetfeld erzeugen. Dieses wird vom Sensor 20 detektiert, so dass eine Drehzahlerkennung des Rotors 4 möglich ist.

Auf der der Messspitze gegenüberliegenden hinteren Seite des Sensors 20 weist dieser eine Sensorbasis 21 auf, an deren Außenseite Anschlüsse des Sensors 20 angeordnet sind. Im dargestellten Beispiel ist der Sensor 20 über einen Anschlussadapter 30 und ein Anschlusskabel 31 elektrisch kontaktiert. Es versteht sich, dass anstelle eines aufsteckbaren Anschlussadapters 30 auch ein fester Anschluss vorgesehen sein kann, der unlösbar in das Anschlusskabel 31 übergeht.

Die Anordnung des Sensors 20 in der Bohrung 2 durch die Klemmhülse 10 ermöglicht eine axiale Verschiebbarkeit des Sensors 20 entlang seiner Längsachse, um einen Abstand zu den Polzähnen 5 des Rotors 4 einzustellen bzw. um zu ermöglichen, dass der Sensor 20 bei Kontakt mit dem Rotor 4 ohne Beschädigung zurückweicht und die axiale Position des Sensors 20 so selbst eingestellt wird.

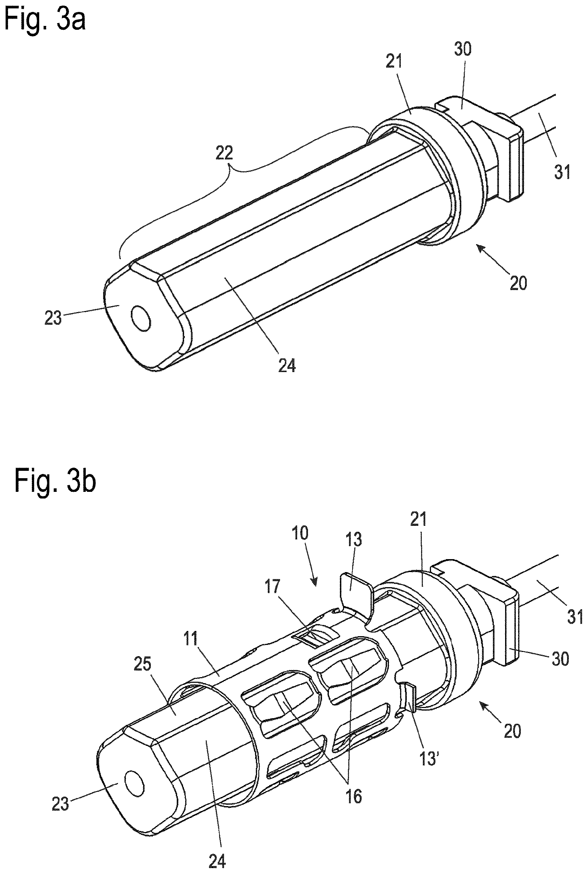

Dabei ist die Klemmhülse 10 selbst verdrehsicher in der Bohrung 2 gehalten, im dargestellten Beispiel durch Laschen 13, die an einem hinteren (von der Messspitze 23 aus gesehen) Rand der Klemmhülse 10 nach außen abgebogen sind und die in Vertiefungen 3, die am Umfang der Bohrung 2 ausgebildet sind, eingelegt sind. Die Klemmhülse 10 weist einen rohrförmigen Grundkörper 11 aus, der verschiedene nach innen weisende Klemm- und Positionierungselemente 14 umfasst, die der axial verschiebbaren und gleichzeitig verdrehsicheren Halterung des Sensors 20 dienen. Die Klemm- und Positionierungselemente 14 werden nachfolgend detaillierter ab der Figur 3a erläutert.

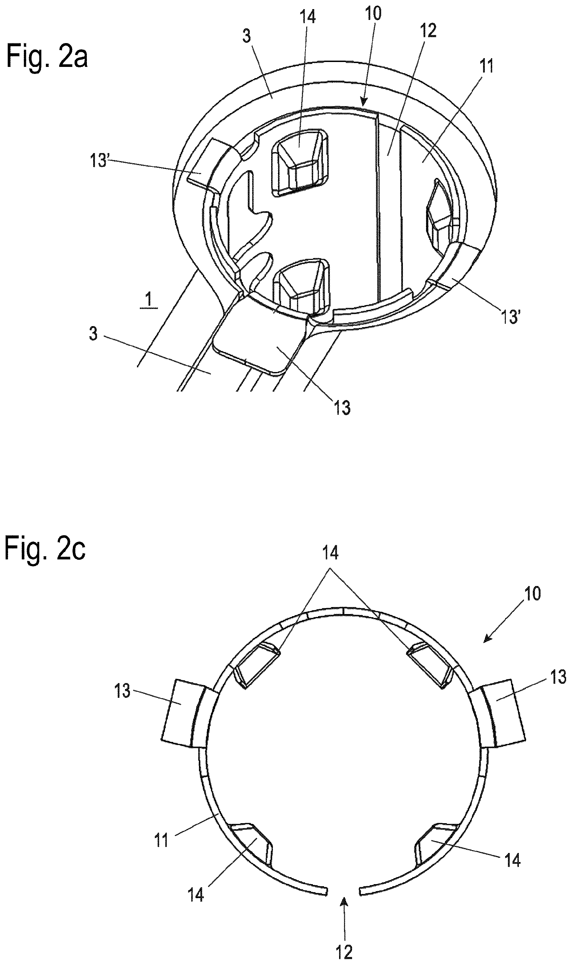

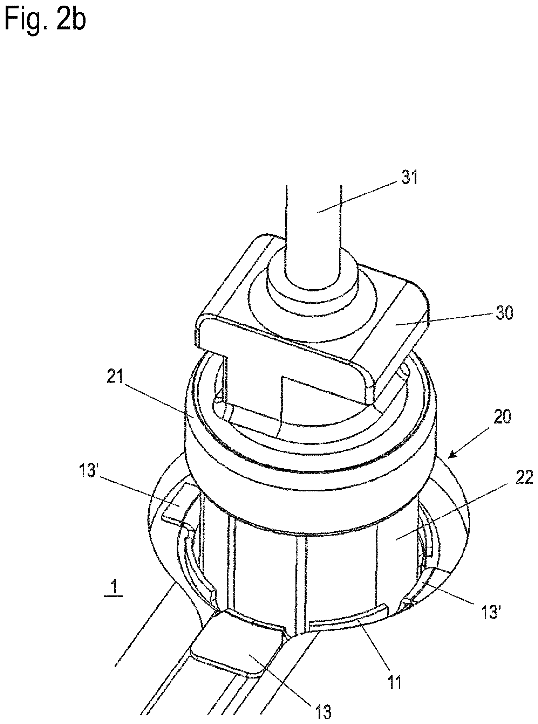

In den Figuren 2a und 2b ist jeweils in Form einer isometrischen Darstellung die Halterung 1 gemäß Figur 1 mit der eingesetzten Klemmhülse 10 ohne den Sensor 20 (Figur 2a) bzw. mit dem Sensor 20 (Figur 2b) dargestellt. In den Zeichnungen ist gut zu erkennen, dass die Vertiefung 3 in der Halterung 1 den Rand der Bohrung 2 in Art eines Absatzes umgibt, der an einer Stelle in eine Nut übergeht. In diese Nut greift eine der Laschen 13 der Klemmhülse 10 ein, wodurch ein Verdrehen der Klemmhülse 10 in der Halterung 1 verhindert ist. Die anderen beiden Laschen 13' liegen in dem Bereich auf der Vertiefung 3 auf, in dem diese kreisrund diese die Bohrung 2 umgibt. Eine Verdrehsicherung ist durch diese Laschen 13' nicht gegeben, wohl aber eine definierte Position der Klemmhülse 10 in der Bohrung 2 in axialer Richtung.

Figur 2b zeigt die Anordnung gemäß Figur 2a mit eingeschobenem Sensor 20, der über den Anschlussadapter 30 und das Anschlusskabel 31 kontaktiert ist.

Figur 2c zeigt eine alternative Ausgestaltung der Klemmhülse 10, die sich durch die Anzahl und Anordnung der Laschen 13 unterscheidet. Die Figur 2c gibt die Klemmhülse 10 in einer Draufsicht auf den oberen Rand, an dem die Laschen 13 angeordnet sind, wieder. Bei dieser Ausgestaltung sind zwei sich nicht genau diametral gegenüberliegende Laschen 13 ausgebildet. Diese Klemmhülse 10 ist zum Einsatz in einer Halterung 1 geeignet, die zwei separate Einbuchtungen als Vertiefungen für die einzelnen Laschen 13 aufweisen. Beide Laschen 13 dienen dann sowohl der Verdrehsicherung als auch der Definition der Axialposition der Klemmhülse 10 in der Halterung 1. Anstelle einzelner Vertiefungen für die Laschen 13 können auch passende Erhöhungen auf der Oberseite der Halterung 10 vorgesehen sein, die die Laschen 13 umgeben.

Gemeinsam für alle im Rahmen dieser Anmeldung gezeigten Klemmhülsen 10 ist, dass sie bevorzugt aus einem elastischen Blechmaterial, beispielsweise Beryllium-Kupfer gefertigt ist, besonders bevorzugt in einem Stanz-Biege-Verfahren, so dass sie einteilig mit wenig Arbeitsschritten herstellbar sind.

Sie weisen vorteilhaft einen rohrförmigen Grundkörper 11 mit einem axialen Schlitz 12 auf, um zum einen im genannten Stanz-Biege-Verfahren herstellbar zu sein und zum anderen gut klemmend in der Bohrung 2 eingepasst zu sein.

Das Zusammenwirken der Klemmhülse 10 mit dem Sensor 20 ist in den Figuren 3a bis c detaillierter dargestellt. Figur 3a zeigt zunächst den Sensor 20 mit dem Anschlussadapter 30 separat in einer isometrischen Darstellung.

Der Sensor 20 weist eine zylinderförmige Sensorbasis 21 auf, auf deren Außenseite der Anschlussadapter 30 aufgesteckt ist. Auf der dem Anschlussadapter 30 gegenüberliegenden Seite der Sensorbasis 21 ist ein stabförmiger Sensorkopf 22 ausgebildet, der in die Messspitze 23 mündet. Bei dem dargestellten Sensor 20 ist der Querschnitt über die gesamte Länge des Sensorkopfes 22 gleichbleibend nicht zylinderförmig. Der Querschnitt entspricht im Wesentlichen dem eines Vierecks mit vier Seitenflächen 24 und drei abgerundeten Ecken sowie einer abgeflachten (oder angefasten) Ecke. Die durch diese Abflachung oder Anfasung gebildete axial verlaufende Fläche wird nachfolgend auch als Orientierungsfläche 25 bezeichnet.

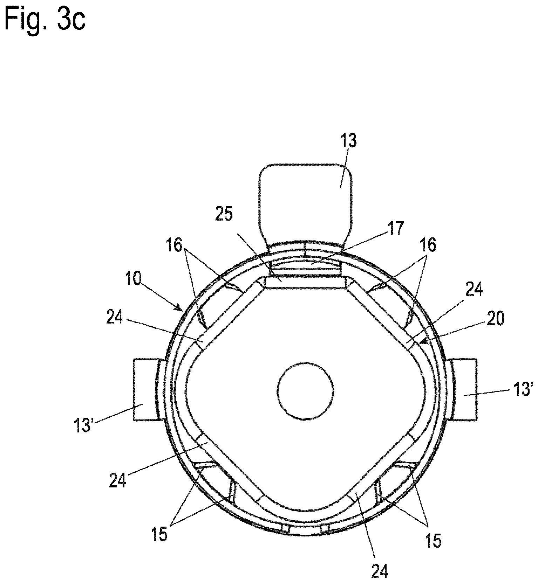

Figur 3b zeigt in gleicher Weise wie die Figur 3a den Sensor 20, eingesteckt in die Klemmhülse 10. Figur 3c gibt die Anordnung aus Klemmhülse 10 und eingestecktem Sensor 20 in einer Draufsicht auf die Messspitze 23 des Sensors 20 wieder.

In den Figuren 3b und 3c sind die in den vorherigen Figuren gemeinsam als Klemm- und Positionierungselemente 14 bezeichneten Elemente differenzierter dargestellt. Entlang des Umfangs des Grundkörpers 11 sind zunächst paarweise gegenüberliegende Dome 15 und Federelemente 16 angeordnet. Die Dome 15 sind starre Elemente, an denen Seitenflächen 24 anliegen. Sie fungieren somit als Positionierungselemente. Die Dome 15 sind um 90° zueinander gedreht orientiert und unterstützen zwei benachbarte der Seitenflächen 24.

Auf den jeweils gegenüberliegenden Seitenflächen 24 liegen Federelemente 16 an, die entsprechend den Sensorkopf 22 gegen die Dome 15 drücken und damit axial verschiebbar festliegen. Die Federelemente 16 fungieren somit als Klemmelemente.

Mittig zwischen zweien der Federelemente 16 ist ein nach innen hervorstehendes Orientierungselement 17 angeordnet, das auf die Orientierungsfläche 25 des Sensors 20 hinweist.

Im Hinblick auf die Dome 15 bzw. Federelemente 16 wäre ein Einsetzen des Sensors 20 in vier verschiedenen, jeweils um 90° zueinander gedrehten Orientierungen möglich. Durch das Orientierungselement 17 und die Orientierungsfläche 25 kann der Sensor 20 jedoch nur in einer definierten Orientierung, wie sie in den Figuren 3b und 3c gezeigt ist, in die Klemmhülse 10 eingeschoben werden. Beim dargestellten Beispiel ist das Orientierungselement 17genau unterhalb der Lasche 13 positioniert. Vorteilhaft ist so die Lage des Orientierungselements 17 anhand der Lasche 13 gut zu erkennen, wenn die Klemmhülse 10 bereits in die Bohrung 2 der Halterung 1 eingesetzt ist. Beim Montieren des Sensors 20 kann die Orientierungsfläche 25 anhand der Lasche 13 ausgerichtet werden.

Die Dome 15, die Federelemente 16 und das Orientierungselement 17 sind bevorzugt aus dem Grundkörper 11 der Klemmhülse 10 herausgestanzt bzw. geprägt, so dass die Klemmhülse 10 einstückig herstellbar ist.

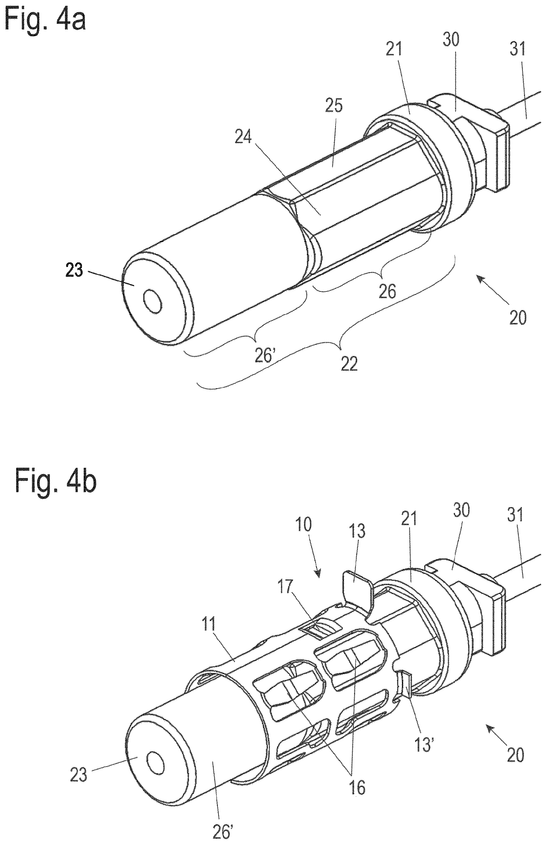

In den Figuren 4a bis 4c ist in gleicher Weise wie in den Figuren 3a bis 3c ein erstes Ausführungsbeispiel dargestellt. Gleiche Bezugszeichen kennzeichnen in diesen wie den folgenden Figuren gleiche oder gleich wirkende Elemente wie bei den zuvor beschriebenen Figuren.

Vom grundsätzlichen Aufbau unterscheidet sich das in den Figuren 4a bis 4c gezeigte Beispiel nicht von dem in den Figuren 3a bis 3c gezeigten. Ein Unterschied besteht darin, dass beim Sensor 20 der nicht zylindersymmetrische, also unrunde Querschnitt, nicht über die gesamte Länge des Sensorkopfes 22 ausgebildet ist, sondern nur in einem ersten Abschnitt 26, der sich an die Basis 21 des Sensors 20 anschließt.

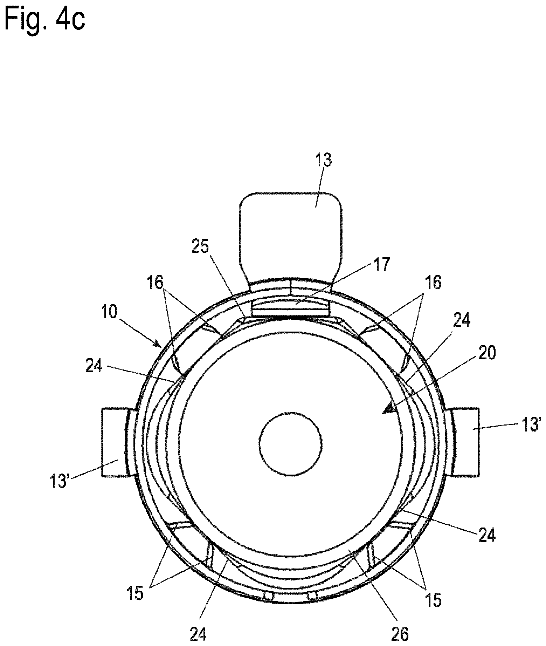

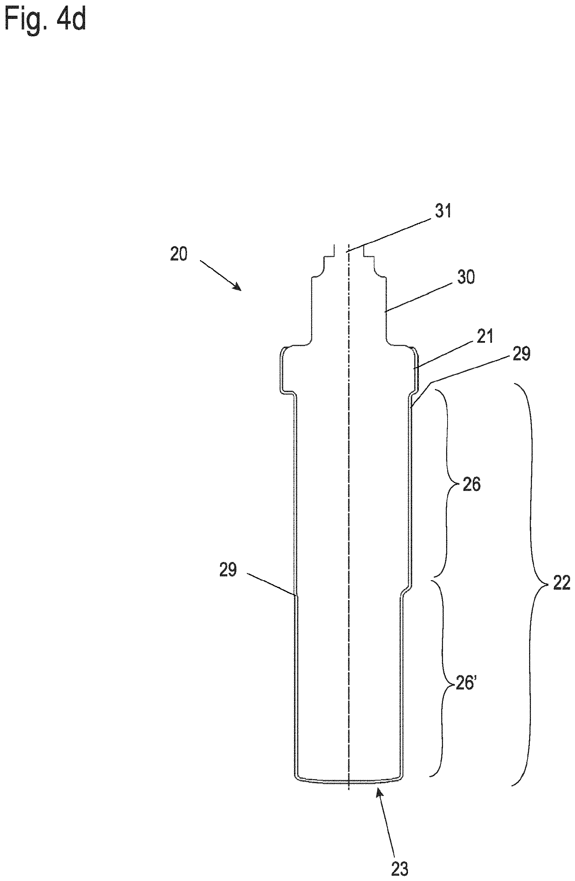

Ein sich an die Messspitze 23 anschließender weiterer Abschnitt 26' ist dagegen zylindersymmetrisch ausgebildet. Dabei ist der Durchmesser des weiteren, zylindersymmetrischen Abschnitts 26' so gewählt, dass die Seitenflächen 24 des nicht zylindersymmetrischen Abschnitts 26 und gegebenenfalls auch die Orientierungsfläche 25 tangential zu dem Umfang des weiteren Abschnitts 26' verläuft. Entsprechend wird beim Einsetzen das Sensormodul 20 durch die Dome 15 und die Federelemente 16 in dem weiteren Abschnitt 26' vergleichbar geführt und kraftschlüssig gehalten, wie es im nicht zylindersymmetrischen Abschnitt 26 ist. Die radiale Positionierung und die Klemmung des Sensors 20 ist somit unabhängig davon, ob sich die Dome 15 und die Federelemente 16 im Abschnitt 26 oder im weiteren Abschnitt 26' befinden. Die Verdrehsicherung erfolgt nach wie vor durch das Zusammenspiel von dem Orientierungselement 17 und der Orientierungsfläche 25. Da das Orientierungselement 17 im hinteren Bereich der Klemmhülse 10 ausgebildet ist, ist eine Verdrehsicherung in einer typischen Einschubposition, wie sie in Figur 4 wiedergegeben ist, gegeben.

Figur 4d zeigt eine Modifikation des in den Figuren 4a-c gezeigten Ausführungsbeispiels in einem Längsschnitt durch die Messspitze 23 des Sensors 20. Grundsätzlich weist der Sensor 20 gemäß Figur 4d den gleichen Aufbau auf wie der Sensor 20 gemäß den Figuren 4a-c. Zusätzlich zum zuvor geschilderten Aufbau ist bei dem Sensor der Figur 4d ein Ummantelung 29 vorhanden, die den Sensorkopf 22 umgibt. Die Ummantelung 29 ist bevorzugt aus einem dünnen Metall geformt und z.B. in Form einer tiefgezogenen Hülse. Es kann beispielsweise ein nicht-magnetisches Material, insbesondere Aluminium verwendet werden. Die gezeigte Ummantelung 29 umgibt die Mantelflächen des Sensorkopfes 22 sowie die Messspitze 23. Die Ummantelung 29 dient als Thermoschild für den Sensorkopf 22 und führt zu einer höheren Temperaturbelastbarkeit des Sensors 20. Die Formgebung des Sensorkopfs 22 ermöglicht es, eine Hülse als Ummantelung 29 einzusetzen, in über den Sensorkopf 22 gestülpt wird und an allen Flächen eng anliegt.

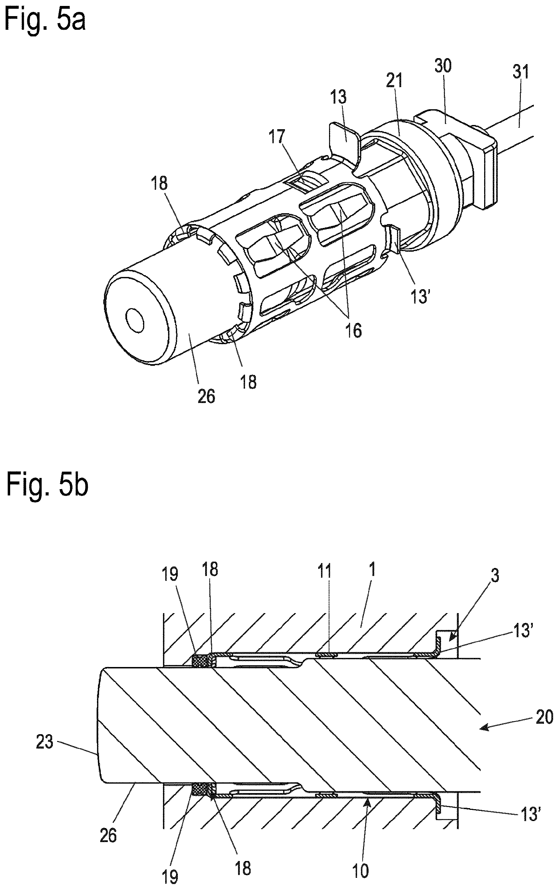

In Figuren 5a und 5b ist eine Variation der Klemmhülse 10 gezeigt, die in Verbindung mit dem Sensor 20 mit dem vorderen zylindersymmetrischen Abschnitt 26 einsetzbar ist.

Die Figur 5a zeigt die Klemmhülse 10 in dieser Variante mit eingesetztem Sensor 20 in einer isometrischen Darstellung analog zu Figur 4b.

Bei dieser Ausgestaltung der Klemmhülse 10 sind am vorderen Rand abgewinkelte Haltelaschen 18 angeordnet, an denen ein Dichtungselement 19 befestigt werden kann. Das Dichtungselement 19 ist bevorzugt umlaufend und kann z.B. einen rechteckigen oder runden Querschnitt aufweisen.

Figur 5b zeigt einen Querschnitt durch eine Halterung 1, in die die Anordnung aus Klemmhülse 10 und Sensor 20 gemäß Figur 5a eingesteckt ist. Bei dieser Halterung ist die Bohrung 2 in der Halterung, in die die Klemmhülse 10 eingesetzt wird, als eine Stufenbohrung ausgebildet, so dass ein Absatz entsteht, auf dem die Dichtung 19 aufliegt. Im unteren Bereich weist die Bohrung 2 einen kleineren Durchmesser auf, durch den der Sensorkopf mit seinem vorderen zylindersymmetrischen Abschnitt 26' ragt. Auf die dargestellte Art wird der Sensor 20 gegenüber der Halterung 1 abgedichtet, um ein Eindringen von Wasser, Öl und/oder Staub in den Bereich der Klemmhülse 10 und damit auch in den Bereich der Anschlüsse des Sensors 20 zu verhindern.

Es wird angemerkt, dass die dargestellte Modifikation der Halterung 1 und Verwendung der Dichtung 19 auch bei nachfolgend gezeigten Ausführungsbeispielen von Sensoren, die einen vorderen zylindersymmetrischen Abschnitt 26' aufweisen, eingesetzt werden kann. Die Modifikation der Klemmhülse 10 mit den Haltelaschen dient dazu, dass die Dichtung 19 beim Ausbau der Klemmhülse 10 mit herausgezogen wird. Grundsätzlich kann eine Dichtung 19 auch ohne zusätzliche Haltelaschen 18 an der Klemmhülse 10 eingesetzt werden.

Darüber hinaus wird angemerkt, dass entsprechende Haltelaschen 18 auch bei den weiteren in dieser Anmeldung dargestellten Klemmhülsen 10 ausgebildet sein können.

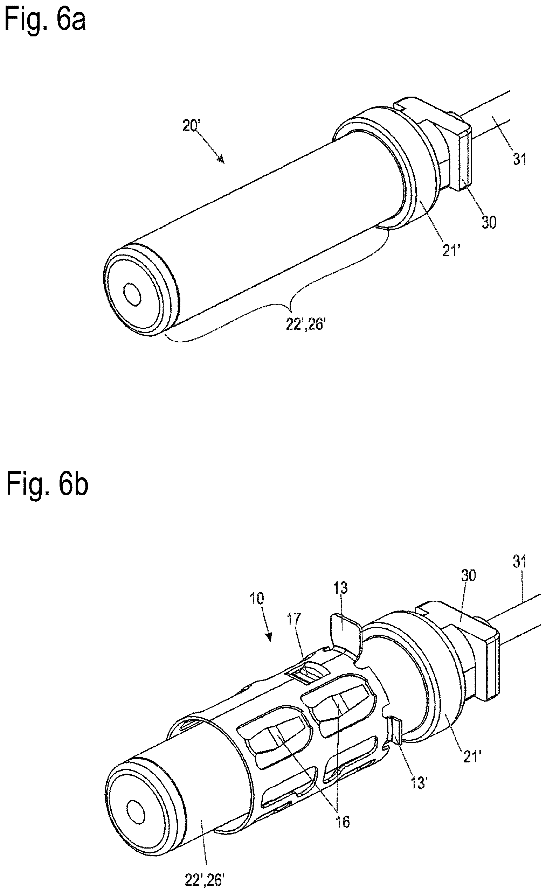

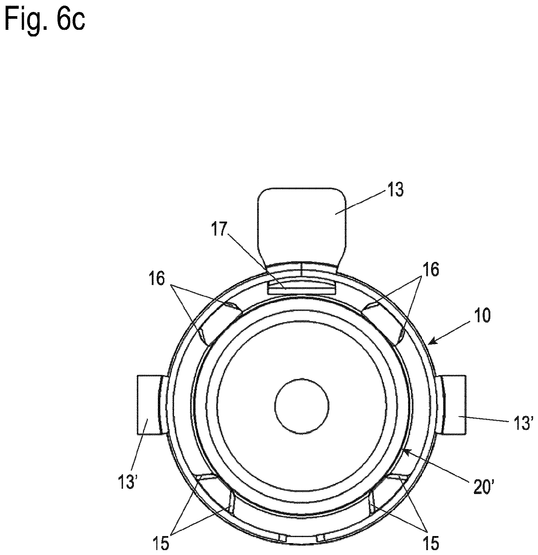

Die Figuren 6a bis 6c zeigen wiederum in gleicher Art wie die Figuren 3a bis 3c den Einsatz eines passiv arbeitenden Sensors 20' in der Klemmhülse 10 des ersten Ausführungsbeispiels.

Die Figuren demonstrieren einen Vorteil der anmeldungsgemäßen Anordnung, nämlich die Rückwärtskompatibilität zu passiven Sensoren 20', bei denen auf eine Orientierung verzichtet werden kann und die keine Orientierungsflächen aufweisen. Bei dem passiven Sensor 20', beispielsweise einem induktiv arbeitenden Sensor, ist der gesamte Sensorkopf 22' als zylindersymmetrischer Abschnitt 26' ausgebildet. Der Durchmesser entspricht dem Durchmesser beim aktiven Sensor 20 gemäß Figur 4a im zylindersymmetrischen Abschnitt 26'.

In ein und derselben Klemmhülse 10, die das Orientierungselement 17 aufweist, kann sowohl der orientierungsabhängige, aktive Sensor 20 eingesetzt werden, als auch der passive Sensor 20'. Dieses vereinfacht Produktions- und Lagerhaltungskosten, da für verschiedene Sensortypen nur eine Art der Klemmhülse 10 hergestellt und vorgehalten werden muss. Weiter sind Nachrüstlösungen möglich, bei denen beispielsweise ein passiver Sensor z.B. für eine Verwendung eines Fahrzeugs in bestimmten Ländern nachträglich mit einem aktiven Sensor ausgestattet werden soll.

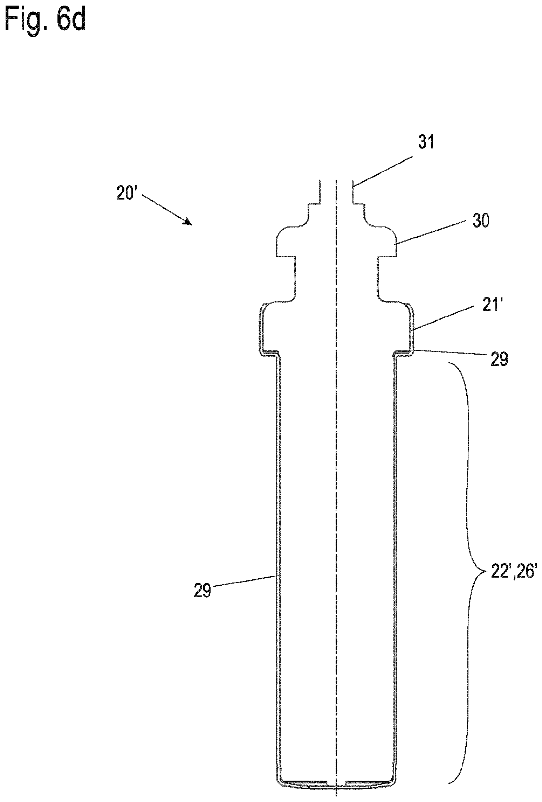

In Figur 6d ist analog zu Figur 4d eine Modifikation des passiven Sensors 20' der Figuren 6a-c gezeigt, bei der wiederum eine Ummantelung 29 vorhanden ist, die den Sensorkopf 22 umgibt. Bezüglich der Ausgestaltung der Ummantelung 29 und der durch sie erzielten Vorteile wird auf die Beschreibung zum Ausführungsbeispiel der Figur 4d verwiesen.

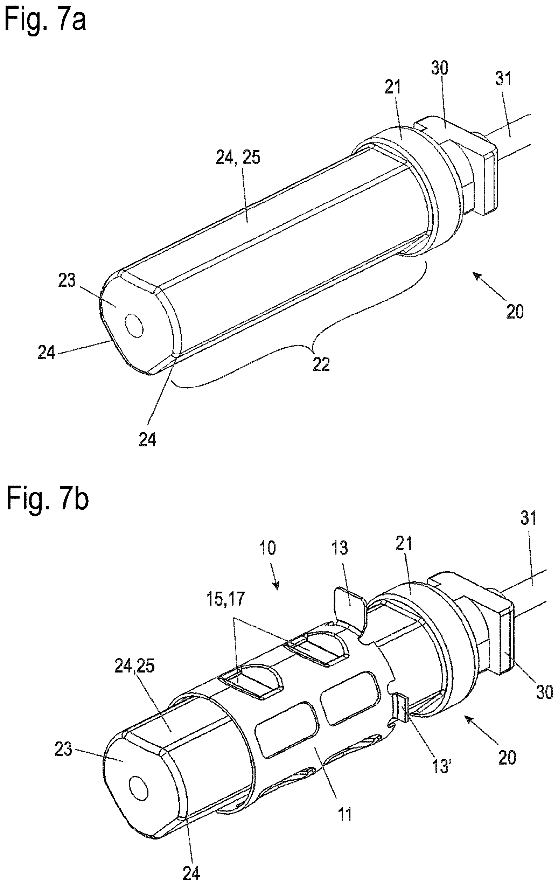

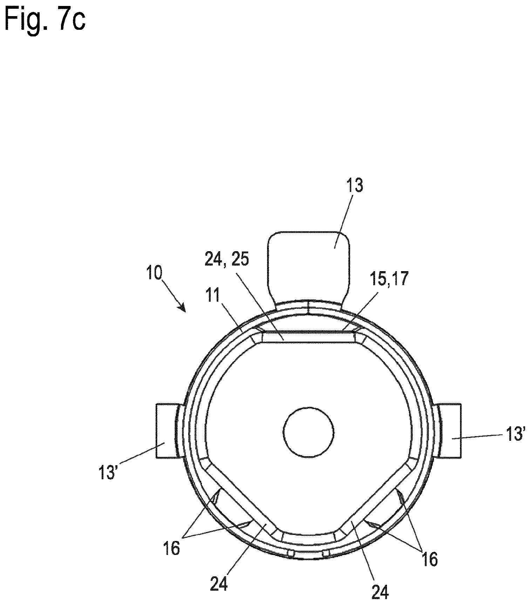

In den Figuren 7a bis 7c ist in gleicher Weise wie in den Figuren 3a bis 3c ein weiteres Beispiel einer Anordnung aus Klemmhülse 10 und Sensor 20 dargestellt. Bezüglich des Grundaufbaus wird auf die Ausführung zu den Figuren 3a-c verwiesen.

Im Unterschied zum Beispiel der Figuren 3a-c weist vorliegend der Sensor 20 im Bereich des Sensorkopfes 22 einen Querschnitt auf, der drei Seitenflächen 24 umfasst, von denen zwei in einem Winkel von 90° zueinander stehen und eine dritte in einem Winkel von 45° zu beiden erstgenannten. Die verbleibenden Segmente haben im Querschnitt eine kreisbogenförmige Kontur.

In der Klemmhülse 10 liegen an den beiden Seitenflächen 24, die einen Winkel von 90° zueinander einschließen, Federelemente 16 an. Die dritte Seitenfläche 24 liegt an einem Element an, das gleichzeitig als Dom 15 und als Orientierungselement 17 dient. Entsprechend stellt diese Seitenfläche 24 auch die Orientierungsfläche 25 des Sensors 20 dar.

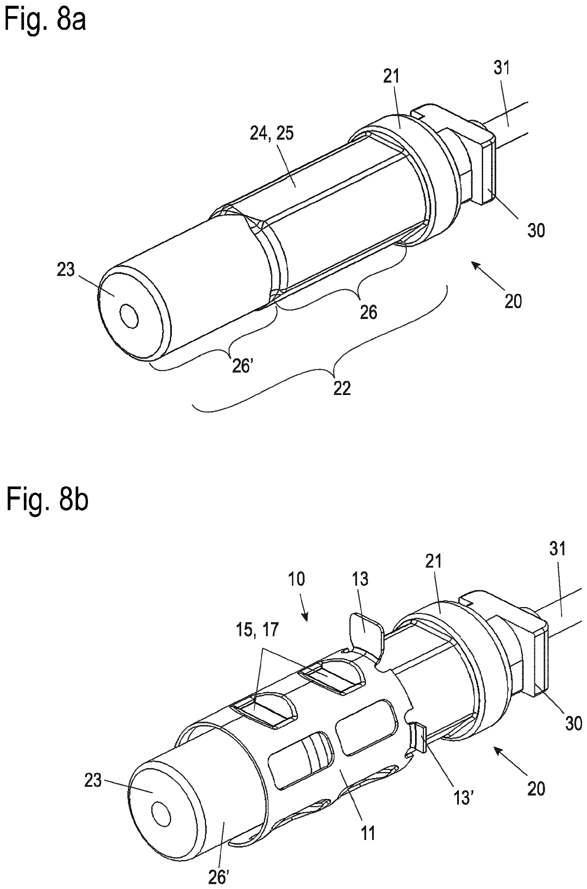

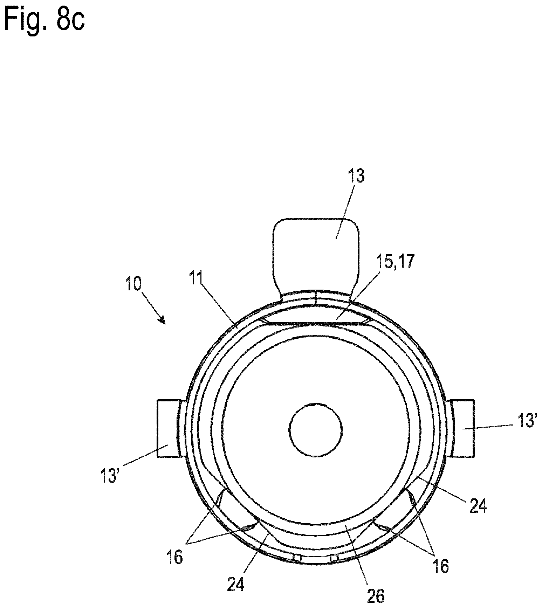

In den Figuren 8a bis 8c ist in gleicher Art wie in den Figuren 7a bis 7c ein zweites Ausführungsbeispiel gezeigt, bei der der Sensor 20 im vorderen Bereich einen zylindersymmetrischen Abschnitt 26' des Sensorkopfes 22 aufweist. Wiederum sind die Seiten bzw. Orientierungsflächen 24, 25 des nicht zylindersymmetrischen Abschnitts 26 tangential in den Umfang des zylindersymmetrischen Abschnitts 26' über. Entsprechend wirken die Federelemente 16 und der Dom 15 sowohl im nicht zylindersymmetrischen Abschnitt 26 als auch im zylindersymmetrischen Abschnitt 26'. Vergleichbar wie in den Figuren 5a und 5b gezeigt ist, kann auch der in den Figuren 8a bis 8c wiedergegebene Sensor mit einer Dichtung 19 abgedichtet in der Halterung 1 eingesetzt werden.

Die Figuren 8a bis 8c zeigen auch, dass die Klemmhülse 10 des zweiten Ausführungsbeispiels ebenfalls mit einem passiv arbeitenden Sensor 20' gemäß Figur 6a verwendet werden kann. Sie bietet diesbezüglich die gleichen Vorteile wie die Klemmhülse 10 des ersten Ausführungsbeispiels.

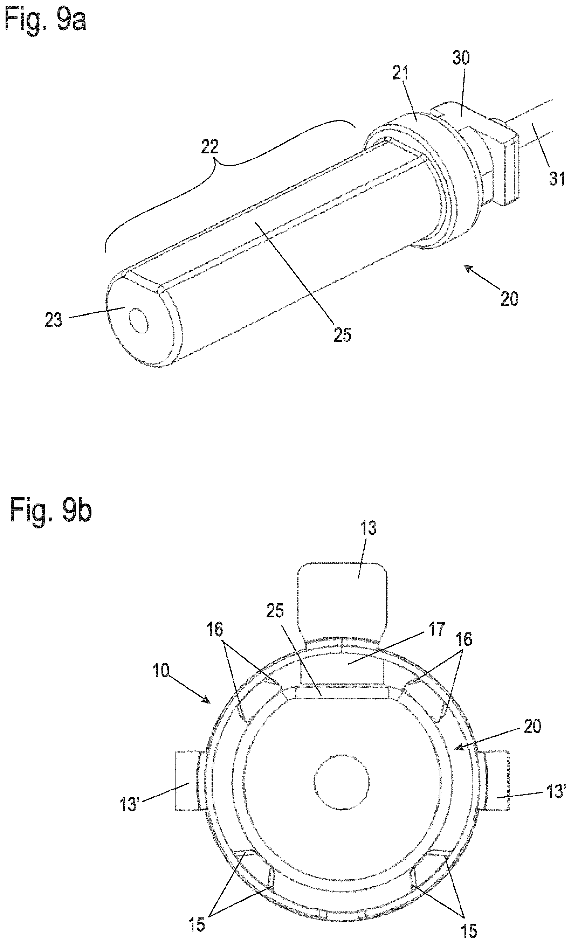

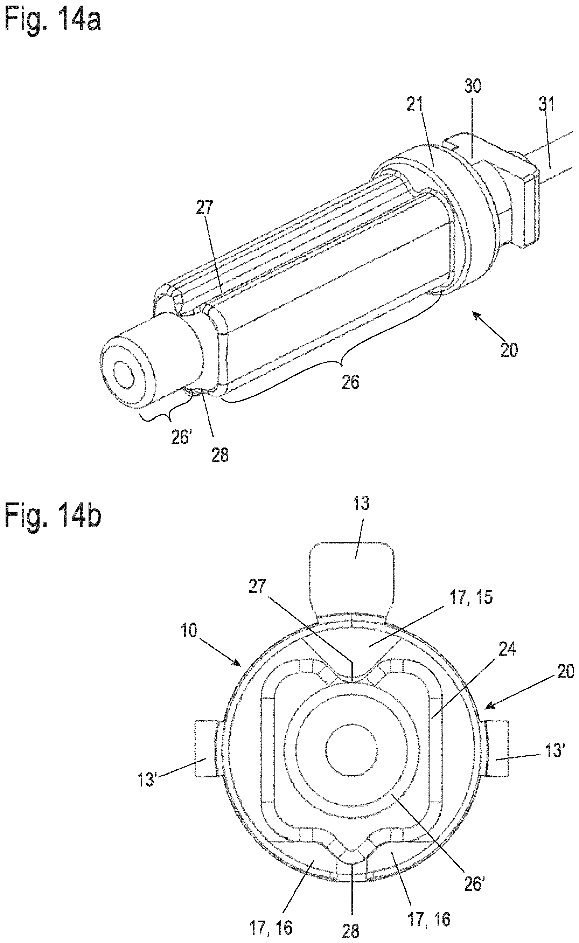

In den Figuren 9a, b bis 14a, b sind weitere Beispiele einer Anordnung aus Sensor 20 und Klemmhülse 10 dargestellt. In den Figuren mit dem Zusatz (a) ist jeweils der Sensor 20 separat in einer isometrischen Zeichnung dargestellt. In den Figuren mit dem Zusatz (b) ist jeweils eine Draufsicht auf das vordere Ende der Klemmhülse 10 mit eingesetztem Sensor 20 wiedergegeben.

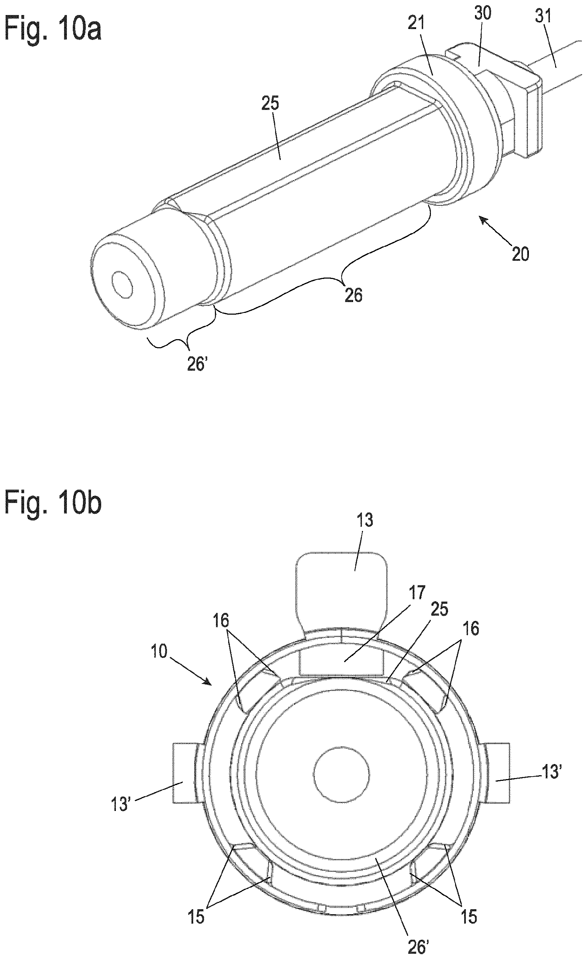

In den Figuren 9, 11, 13 (jeweils a, b) sind drei verschiedene Beispiele wiedergegeben, bei denen der Querschnitt des Sensorkopfes 22 über die gesamte Länge nicht zylindersymmetrisch ausgebildet ist. In den Figuren 10, 12, 14 (jeweils a, b) sind korrelierende Ausgestaltungen gezeigt, bei denen der Sensorkopf 22 einen nicht zylindersymmetrischen Abschnitt 26 und im vorderen Bereich einen zylindersymmetrischen Abschnitt 26' aufweist. Die Figuren 10, 12, 14 (jeweils a, b) stellen erfindungsgemäße Ausführungsbeispiele dar.

Beim Beispiel der Figuren 9a, b bzw. beim Ausführungsbeispiel der Figuren 10a, b ist der Querschnitt des Sensorkopfes 22 bzw. des nicht zylindersymmetrischen Abschnitts 26 bis auf eine Orientierungsfläche 25 kreisrund. Die Orientierungsfläche 25 wirkt beim Einsatz in die Klemmhülse 10 mit einem entsprechend ausgestalteten Orientierungselement 17 zusammen, um den Sensor 20 nur in einer vorgegebenen Orientierung in die Klemmhülse 10 einsetzen zu können. Die Halterung des Sensors 20 in der Klemmhülse 10 erfolgt wiederum durch sich paarweise gegenüberstehende Dome 15 und Federelemente 16, wobei diese Elemente anders als bei den zuvor gezeigten Ausführungsbeispielen ausnahmslos an gekrümmten Abschnitten des Sensorkopfes 22 anliegen.

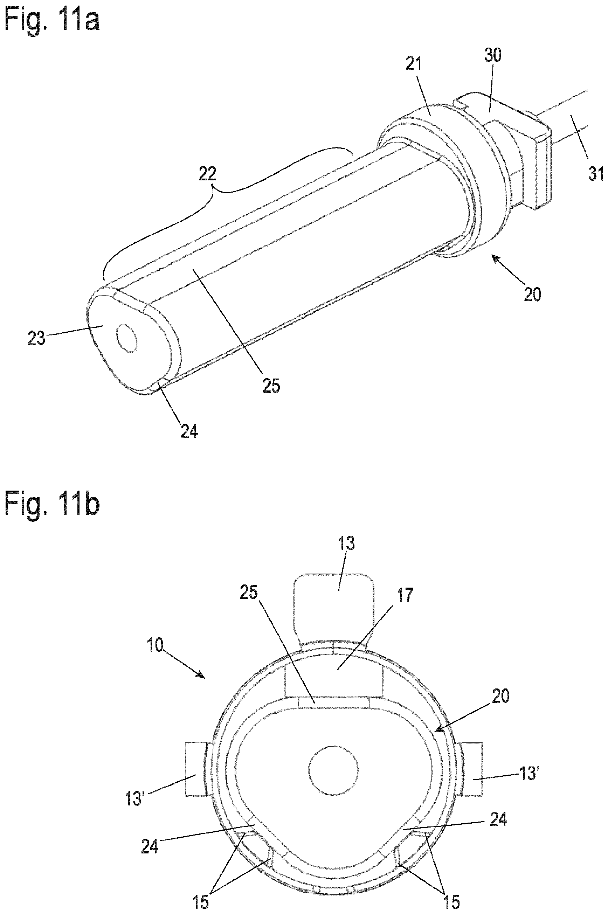

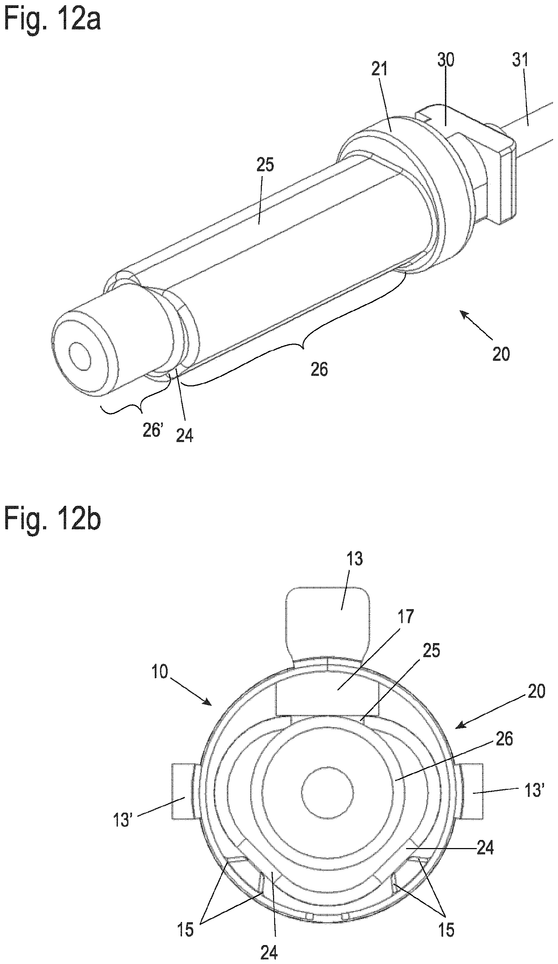

Beim Beispiel der Figuren 11a, b bzw. beim Ausführungsbeispiel der Figuren 12a, b weist der Sensorkopf 22 bzw. sein nicht zylindersymmetrischer Abschnitt 26 einen abgerundeten dreieckigen Querschnitt auf mit zwei Seitenflächen 24 und einer weiteren Seitenfläche 24, die gleichzeitig als Orientierungsfläche 25 dient. Bezüglich der Grundform ist das in diesen Figuren dargestellte Ausführungsbeispiel dem der Figuren 7a bis 7c ähnlich.

In der zugeordneten Klemmhülse 10 liegt die Orientierungsfläche 25 an dem Orientierungselement 17 an, das gleichzeitig die Funktion des Domes 15 übernimmt. Gegen die beiden verbleibenden Seitenflächen 24 drücken Federelemente 16. In alternativen Ausgestaltungen ist ebenfalls vorstellbar, dass das Orientierungselement 17 nicht gleichzeitig den Dom 15, sondern das Federelement 16 bildet.

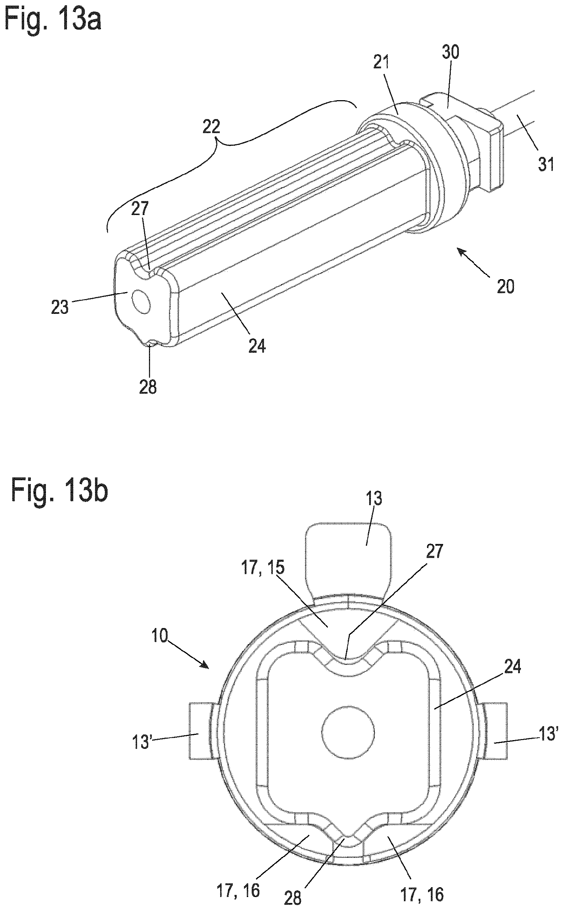

Bei dem Beispiel der Figuren 13a, b bzw. beim Ausführungsbeispiel der Figuren 14a, b weist der Sensorkopf 22 bzw. sein nicht zylindersymmetrischer Abschnitt 26 einen eher quadratischen Querschnitt auf mit zwei gegenüberliegend angeordneten geraden Seitenflächen 24. An den in den Figuren oben bzw. unten dargestellten Flächen sind nut- bzw. federähnliche Orientierungskonturen 27, 28 ausgebildet, die mit entsprechend komplementär konturierten Orientierungselementen 17 der Klemmhülse 10 zusammenwirken. Wie in den Figuren 13b und 14b zu erkennen ist, kann eines der Orientierungselemente 17 als Dom 15 und das gegenüberliegende als Federelement 16 ausgebildet sein. Beispielhaft ist das in die nutförmige Orientierungskontur 27 eingreifende Orientierungselement 17 als Dom 15 und das gegenüberliegende als Federelement 16 ausgebildet. Dieses kann in einer alternativen Ausgestaltung umgekehrt umgesetzt sein.

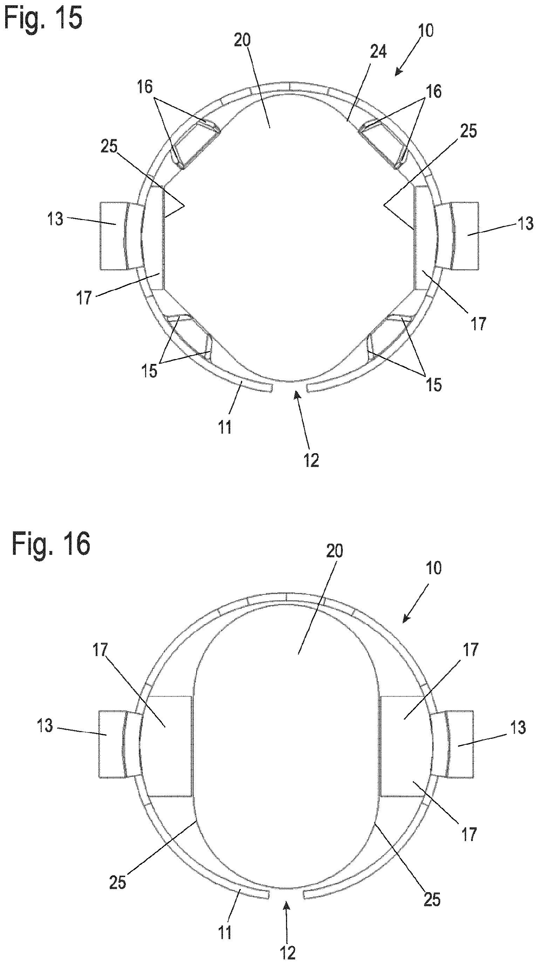

In den Figuren 15 und 16 sind weitere Beispiele von Klemmhülse 10 und Sensor 20 dargestellt, bei denen die Orientierung des Sensors 20 in der Klemmhülse 10 nicht eindeutig ist, sondern zwei mögliche Orientierungen zugelassen sind, die sich durch Drehung des Sensors 20 um seine Längsachse um 180° ergeben.

Das in Figur 15 dargestellte Beispiel ist eine Abwandlung des in den Figuren 3a bis 3c gezeigten Beispiels. Das in Figur 16 gezeigte Beispiel stellt eine entsprechende Abwandlung des in den Figuren 9a, b gezeigten Beispiels dar. Die genannten Abwandlungen sind beispielsweise dann sinnvoll, wenn der Sensor 20 einen Betrieb in der einen oder anderen Stellung zulässt, wobei das Sensorsignal entweder in beiden Stellungen gleich ist oder beispielsweise sich nur in seiner Polarität unterscheidet, die von einer Auswerteelektronik auf einfache Weise korrigiert werden kann. Für den Anwender ergibt sich der Vorteil, dass eine passende Orientierung leichter aufgefunden werden kann, was einen Einbau des Sensors 20 in das System vereinfachen kann.

### Bezugszeichenliste

- 1: Halterung
- 2: Bohrung
- 3: Vertiefung
- 4: Rotor
- 5: Polzahn

- 10: Klemmhülse
- 11: Grundkörper
- 12: Schlitz
- 13, 13': Lasche
- 14: Klemm- und Positionierungselement
- 15: Dom
- 16: Federelement
- 17: Orientierungselement
- 18: Haltelasche
- 19: Dichtung

- 20, 20': Drehimpulsgeber (Sensor)
- 21, 21': Sensorbasis
- 22, 22': Sensorkopf
- 23: Messspitze
- 24: Orientierungsfläche
- 24: Seitenfläche
- 25: Orientierungsfläche
- 26: nicht zylindersymmetrischer Abschnitt
- 26': zylindersymmetrischer Abschnitt
- 27, 28: Orientierungskontur
- 29: Ummantelung

- 30: Anschlussadapter
- 31: Anschlusskabel

## Patentansprüche

1. Anordnung eines stabförmigen Drehimpulsgebers (20) und einer Klemmhülse (10) in einer Bohrung (2) einer Halterung (1) zur Erfassung einer Drehzahl eines Rotors (4), wobei der Drehimpulsgeber (20) eine Sensorbasis (21) mit Anschlüssen des Drehimpulsgebers (20) und einen Sensorkopf (22) mit einer Messspitze (23) aufweist und wobei die Klemmhülse (10) verdrehsicher in der Bohrung (2) positioniert ist und der Drehimpulsgeber (20) mit dem Sensorkopf (22) axial verschiebbar in der Klemmhülse (10) kraftschlüssig gehalten ist, **dadurch gekennzeichnet, dass** der Sensorkopf (22) in einem ersten Abschnitt (26), der sich an die Sensorbasis (21) anschließt, einen nicht-zylindersymmetrischen Querschnitt mit einer Orientierungsfläche (25) aufweist, dass die Klemmhülse (10) mindestens ein nach innen weisendes Orientierungselement (17) aufweist, dass der Sensorkopf (22) aufgrund eines Zusammenspiels von dem Orientierungselement (17) und der Orientierungsfläche (25) verdrehsicher in der Klemmhülse (10) angeordnet ist, und dass der Sensorkopf (22) in einem weiteren Abschnitt (26'), der sich an die Messspitze (23) anschließt, zylindersymmetrisch ausgebildet ist.

2. Anordnung nach Anspruch 1, bei der die Klemmhülse (10) mindestens ein nach innen weisendes Klemm- und Positionierungselement (14) aufweist, welches dazu ausgebildet ist, den Sensorkopf (22) axial verschiebbar zu halten.

3. Anordnung nach Anspruch 2, bei der das mindestens eine Klemm- und Positionierungselement (14) starr oder flexibel ausgebildet ist.

4. Anordnung nach Anspruch 3, bei der das mindestens eine Klemm- und Positionierungselement (14) mindestens einen starren Dom (15) umfasst und ein diesem gegenüberliegendes Federelement (16).

5. Anordnung nach Anspruch 4, bei der die Klemmhülse (10) mindestens zwei starre Dome (15) mit jeweils einem gegenüberliegenden Federelement (16) aufweist.

6. Anordnung nach Anspruch 5, bei der die beiden Dome (15) im Hinblick auf ihre Radialposition in der Klemmhülse (10) um 90° zueinander verdreht angeordnet sind.

7. Anordnung nach einem der Ansprüche 1 bis 6, bei der das Orientierungselement (17) und/oder das mindestens eine Klemm- und Positionierungselement (14) aus einem Grundkörper (11) der Klemmhülse (10) herausgestanzt bzw. geprägt sind bzw. ist.

8. Anordnung nach einem der Ansprüche 1 bis 7, bei der die Klemmhülse (10) mindestens ein Element aufweist, durch das sie verdrehsicher in der Bohrung (2) positioniert ist.

9. Anordnung nach Anspruch 8, bei der das Element eine nach außen ausgestellte Lasche (13, 13') ist.

10. Anordnung nach Anspruch 9, bei der die Lasche (13, 13') zudem so ausgebildet ist, dass sie die Klemmhülse (10) axial in der Bohrung positioniert.

11. Anordnung nach einem der Ansprüche 1 bis 10, bei der die Formgebung des Sensorkopfs (22) genau eine mögliche Drehposition des Sensorkopfs (22) in der Klemmhülse (10) definiert.

12. Anordnung nach einem der Ansprüche 1 bis 10, bei der die Formgebung des Sensorkopfs (22) mehr als eine mögliche Drehposition des Sensorkopfs (22) in der Klemmhülse (10) definiert.

13. Anordnung nach einem der Ansprüche 1 bis 12, bei der der Drehimpulsgeber (20) einen Hall-Sensor umfasst.

14. Anordnung nach einem der Ansprüche 1 bis 13, bei der der Sensorkopf (22) zumindest abschnittsweise von einer Ummantelung (29) umgeben ist.

## Claims

1. An arrangement of a rod-shaped rotary pulse encoder (20) and a clamping sleeve (10) in a bore (2) of a holder (1), for sensing a rotational speed of a rotor (4), the rotary pulse encoder (20) having a sensor base (21) with ports of the rotary pulse encoder (20) and a sensor head (22) with a measuring tip (23), the clamping sleeve (10) being positioned in the bore (2) so as to be secured against rotation and the rotary pulse encoder (20) together with the sensor head (22) being held in a force-fit in the clamping sleeve (10) so as to be axially displaceable, **characterised in that** a first portion (26) of the sensor head (22) that connects to the sensor base (21) has a non-cylinder-symmetrical cross section with a positioning surface (25);
the clamping sleeve (10) has at least one inward facing positioning element (17);
the sensor head (22) is arranged so as to be secured against rotation in the clamping sleeve (10) due to the interaction of the positioning element (17) and the positioning surface (25);
and **in that** a further portion (26') of the sensor head (22) that connects to the measuring tip (23) is of cylinder-symmetrical design.

2. An arrangement according to claim 1, in which the clamping sleeve (10) has at least one inward facing clamping and positioning element (14) that is designed to hold the sensor head (22) in an axially displaceable manner.

3. An arrangement according to claim 2, in which the at least one clamping and positioning element (14) is of rigid or flexible design.

4. An arrangement according to claim 3, in which the at least one clamping and positioning element (14) comprises at least one rigid dome (15) and a spring element (16) arranged opposite this dome (15).

5. An arrangement according to claim 4, in which the clamping sleeve (10) has at least two rigid domes (15), each having a spring element (16) arranged opposite it.

6. An arrangement according to claim 5, in which the two domes (15) are arranged in the clamping sleeve (10) so as to be rotated by 90° relative to one another with respect to their radial position.

7. An arrangement according to any one of claims 1 to 6, in which the positioning element (17) and/or the at least one clamping and positioning element (14) is/are stamped or punched out of a main body (11) of the clamping sleeve (10).

8. An arrangement according to any one of claims 1 to 7, in which the clamping sleeve (10) has at least one element by means of which it is positioned in the bore (2) so as to be secured against rotation.

9. An arrangement according to claim 8, in which the element is an outwardly projecting lug (13, 13').

10. An arrangement according to claim 9, in which the lug (13, 13') is, in addition, configured so as to position the clamping sleeve (10) axially in the bore.

11. An arrangement according to any one of claims 1 to 10, in which the shape of the sensor head (22) exactly defines one possible rotational position of the sensor head (22) in the clamping sleeve (10).

12. An arrangement according to any one of claims 1 to 10, in which the shape of the sensor head (22) defines more than one possible rotational position of the sensor head (22) in the clamping sleeve (10).

13. An arrangement according to any one of claims 1 to 12, in which the rotary pulse encoder (20) comprises a Hall sensor.

14. An arrangement according to any one of claims 1 to 13, in which at least a section or sections of the sensor head (22) are surrounded by a sheathing (29).

## Revendications

1. Ensemble d'un capteur (20) d'impulsions de rotation en forme de barre et d'une douille (10) de serrage dans un trou (2) d'une fixation (1) pour la détection d'une vitesse de rotation d'un rotor (4), dans lequel le capteur (20) d'impulsion de rotation a une base (21) de capteur ayant des raccords du capteur (20) d'impulsions de rotation et une tête (22) du capteur ayant une pointe (23) de mesure et dans lequel la douille (10) de serrage est mise en position dans le trou (2) sans possibilité de tourner et le capteur (20) d'impulsions de rotation est maintenu à coopération de force dans la douille (10) de serrage avec possibilité de coulisser axialement avec la tête (22) du capteur, **caractérisé**
**en ce que** la tête (22) du capteur a, dans un premier tronçon (26), qui se raccorde à la base (21) du capteur, une section transversale, non symétrique à la manière d'un cylindre et ayant une surface (25) d'orientation,
**en ce que** la douille (10) de serrage a au moins un élément (17) d'orientation tourné vers l'intérieur,
**en ce que** la tête (22) du capteur est montée, en raison d'un jeu combiné de l'élément (17) d'orientation et de la surface (25) d'orientation, sans possibilité de tourner dans la douille (10) de serrage, et en ce que la tête (22) du capteur est à symétrie cylindrique dans un autre tronçon (26'), qui se raccorde à la pointe (23) de mesure.

2. Ensemble suivant la revendication 1, dans lequel la douille (10) de serrage a au moins un élément (14), tourné vers l'intérieur, de serrage et de mise en position, qui est constitué pour maintenir la tête (22) du capteur avec possibilité de coulissement axial.

3. Ensemble suivant la revendication 2, dans lequel le au moins un élément (14) de serrage et de mise en position est rigide ou souple.

4. Ensemble suivant la revendication 3, dans lequel le au moins un élément (14) de serrage et de mise en position comprend au moins un dôme (15) rigide et un élément (16) de ressort opposé à celui-ci.

5. Ensemble suivant la revendication 4, dans lequel la douille (10) de serrage a au moins deux dômes (15) rigides ayant chacun un élément (16) de ressort opposé.

6. Ensemble suivant la revendication 5, dans lequel les deux dômes (15) sont, si l'on considère leurs positions radiales dans la douille (10) de serrage, tournés l'un par rapport à l'autre de 90°.

7. Ensemble suivant l'une des revendications 1 à 6, dans lequel l'élément (17) d'orientation et/ou le au moins un élément (14) de serrage et de mise en position est ou sont poinçonnés ou estampés, à partir d'un corps (11) de base de la douille (10) de serrage.

8. Ensemble suivant l'une des revendications 1 à 7, dans lequel la douille (10) de serrage a au moins un élément, par lequel elle est mise en position sans possibilité de tourner dans le trou (2).

9. Ensemble suivant la revendication 8, dans lequel l'élément est une languette (13, 13') déployée vers l'extérieur.

10. Ensemble suivant la revendication 9, dans lequel la languette (13, 13') est constituée de manière à mettre la douille (10) de serrage en position axialement dans le trou.

11. Ensemble suivant l'une des revendications 1 à 10, dans lequel le façonnage de la tête (22) du capteur définit exactement une position en rotation possible de la tête (22) du capteur dans la douille (10) de serrage.

12. Ensemble suivant l'une des revendications 1 à 10, dans lequel le façonnage de la tête (22) du capteur définit plus d'une position en rotation possible de la tête (22) du capteur dans la douille (10) de serrage.

13. Ensemble suivant l'une des revendications 1 à 12, dans lequel le capteur (20) d'impulsions de rotation comprend un capteur de Hall.

14. Ensemble suivant l'une des revendications 1 à 13, dans lequel la tête (22) du capteur est entourée au moins par endroit d'une enveloppe (29).
